# DEMANDE DE BREVET EUROPEEN

(11) **EP 2 387 020 A1**
(43) Date de publication de la demande: **16.11.2011**
(21) Numéro de dépôt: 11161864.1
(22) Date de dépôt: 11.04.2011
(51) Int. Cl.: G09F 3/02, G09F 3/10, G02C 11/00, G08B 13/24

(54) **Etiquette de marquage, en particulier de lunettes**

(30) Priorité: 12.05.2010 FR 1053746
(71) Demandeur: MC 3, 85300 Soullans (FR)
(72) Inventeur: Traineau, Christophe M., 85300, Sallertaine (FR); Miot, Pascal, 60260, Lamorlaye (FR)
(74) Mandataire: Godineau, Valérie

(57) **Abrégé**

L'invention concerne une étiquette (1) de marquage, en particulier de lunettes (10), ladite étiquette (1) comprenant un corps (2) destiné à être porté par une branche (11) de lunettes et une patte (3) adhésive destinée à être appliquée contre un verre (12) de lunettes, corps (2) et patte (3) étant réalisés d'une seule pièce généralement par découpage d'un flan.

Cette étiquette est caractérisée en ce que le corps (2) de l'étiquette comporte, pour son montage sur ladite branche (11) de lunettes, au moins une ouverture (4) traversante à travers laquelle une branche (11) de lunettes est apte à être enfilée et en ce qu'au moins une partie de la patte (3) de l'étiquette est réalisée en un matériau transparent.

## Description

La présente invention concerne une étiquette de marquage, en particulier de lunettes.

Elle concerne plus particulièrement une étiquette de marquage comprenant un corps destiné à être porté par une branche de lunettes et une patte adhésive destinée à être appliquée contre un verre de lunettes, corps et patte étant réalisés d'une seule pièce généralement par découpage d'un flan.

Le marquage de lunettes n'apporte pas aujourd'hui satisfaction. En effet, ce dernier s'opère généralement à l'aide d'un dispositif antivol rigide, encombrant qui vient se positionner sur une branche de lunettes en prenant en sandwich ladite branche.

Une autre solution pour marquer les lunettes consiste à fixer une étiquette adhésive autour de la branche des lunettes et à cheval sur une partie du verre. Du fait de la conception de l'étiquette réalisée en un matériau imprimable, une partie du verre est masquée par l'étiquette et gêne la vision lors d'un essai des lunettes. En outre, lors de l'enlèvement de l'étiquette, il est nécessaire de nettoyer la monture de lunettes qui comporte des traces de colle. Ce nettoyage peut être fastidieux. De plus, la plupart des dispositifs de marquage risquent de se détacher à la manipulation, la perte d'identification posant alors des soucis à l'opticien.

Un but de la présente invention est donc de proposer une étiquette de marquage dont la conception permet d'une part, de ne pas gêner la vision de l'utilisateur lors d'un essai des lunettes, d'autre part, de ne pas marquer la monture notamment par des traces de colle tout en limitant les risques de désolidarisation de l'étiquette du produit.

Un autre but de la présente invention est de proposer une étiquette de marquage dont la conception permet de disposer d'une surface d'impression importante et d'assurer une identification aisée, en particulier par radio-identification encore appelée radio-fréquence identification (RFID) ou identification par radio-fréquence.

A cet effet, l'invention a pour objet une étiquette de marquage, en particulier de lunettes, ladite étiquette comprenant un corps destiné à être porté par une branche de lunettes et une patte adhésive destinée à être appliquée contre un verre de lunettes, corps et patte étant réalisés d'une seule pièce généralement par découpage d'un flan, caractérisée en ce que le corps de l'étiquette comporte, pour son montage sur ladite branche de lunettes, au moins une ouverture traversante à travers laquelle une branche de lunettes est apte à être enfilée et en ce qu'au moins une partie de la patte de l'étiquette est réalisée en un matériau transparent.

De préférence, la patte est séparée du corps par une zone dite de liaison, ladite zone de liaison étant une zone non adhésive.

Généralement, le flan à partir duquel le corps et la patte sont réalisés est revêtu d'un adhésif sur toute sa surface. Une partie de la surface est ensuite neutralisée à l'aide d'un empiècement. Cet empiècement correspond à la zone de liaison entre patte et corps qui sépare ces derniers. La neutralisation de l'adhésif peut également s'opérer chimiquement.

L'invention a encore pour objet un ensemble du type comprenant une paire de lunettes et au moins une étiquette de marquage du type précité.

L'invention sera bien comprise à la lecture de la description suivante d'exemples de réalisation, en référence aux dessins annexés dans lesquels :
la figure 1 représente une vue en perspective de lunettes équipées d'une étiquette de marquage conforme à l'invention ;
la figure 2 représente une vue à plat de l'étiquette seule, en position dépliée du corps ;
la figure 3 représente une vue à plat de l'étiquette seule, en position repliée du corps de l'étiquette ;
la figure 4 représente une vue en perspective d'un autre mode de réalisation de lunettes équipées d'une étiquette de marquage conforme à l'invention ;
la figure 5 représente une vue à plat de l'étiquette seule de la figure 4, en position dépliée du corps ;
la figure 6 représente une vue à plat de l'étiquette seule de la figure 4, en position repliée du corps de l'étiquette.

Comme mentionné ci-dessus, l'étiquette 1 de marquage, en particulier de lunettes 10, objet de l'invention, comprend un corps 2 apte à être porté par une branche 11 de lunettes et une patte 3 adhésive apte à être appliquée contre un verre 12 de lunettes, corps 2 et patte 3 étant réalisés d'une seule pièce généralement par découpage d'un flan.

De manière caractéristique à l'invention, le corps 2 de l'étiquette comporte, pour son montage sur la branche 11 de lunettes, au moins une ouverture 4 traversante à travers laquelle une branche 11 de lunettes est apte à être enfilée et au moins une partie de la patte 3 de l'étiquette est réalisée en un matériau transparent et généralement indéchirable pour ne pas gêner la vision de l'utilisateur porteur desdites lunettes.

Généralement, la patte 3 est séparée du corps 2 par une zone 5 dite de liaison, ladite zone 5 de liaison étant une zone non adhésive.

Du fait que cette zone 5 de liaison est non adhésive, tout risque de marquage de la monture de lunettes par la présence de traces de colle est évité.

Comme mentionné ci-dessus, cette zone non adhésive est généralement obtenue soit par application sur le flan adhésif découpé formant le corps et la patte de l'étiquette, dans la zone du flanc correspondant à la zone de liaison du corps à ladite patte, d'un empiècement qui neutralise l'adhésif soit par une neutralisation chimique de l'adhésif.

De préférence, le corps 2 de l'étiquette est formé d'au moins deux parties 6A, 6B repliables l'une sur l'autre, au moins l'une des parties étant une partie adhésive, lesdites parties étant solidarisées l'une à l'autre par collage à l'état replié. Cette conception permet de disposer d'une surface d'impression plus grande. Le corps est donc au moins partiellement adhésif.

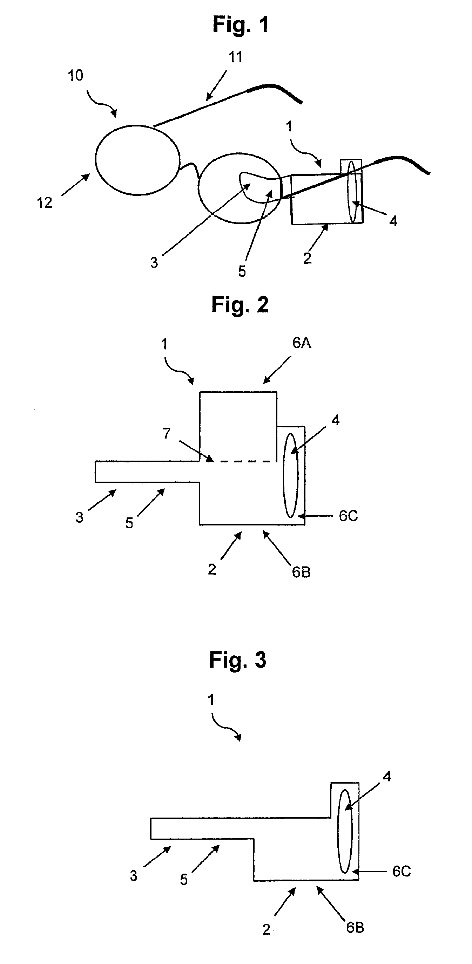

Dans le mode de réalisation représenté aux figures 1 à 3, le corps 2 comporte en outre au moins une partie 6C non adhésive dans laquelle est ménagée la ou chaque ouverture 4 traversante dudit corps 2. Cette partie 6C non adhésive du corps 2 est obtenue, de manière analogue à la zone 5 de liaison entre patte 3 et corps 2, par neutralisation de l'adhésif du corps en revêtant ce dernier d'un empiècement dans la zone à neutraliser ou en neutralisant chimiquement la colle.

De préférence, les parties 6A, 6B du corps 2, repliables l'une sur l'autre, sont positionnées entre la partie 6C non adhésive du corps et la patte 3 de l'étiquette.

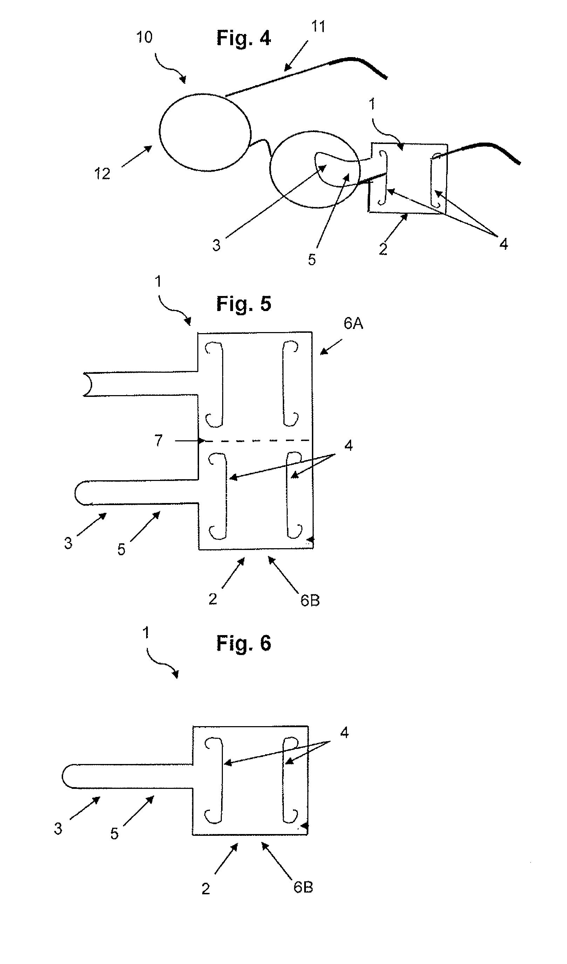

Le mode de réalisation des figures 4 à 6 se distingue du mode de réalisation des figures 1 à 3, notamment par l'absence de cette partie 6C, les ouvertures 4 étant directement ménagées dans les parties 6A, 6B repliables l'une sur l'autre du corps 2 de l'étiquette. Dans ce mode de réalisation, la patte 3 est formée d'au moins deux parties positionnables l'une sur l'autre, chaque partie de patte étant solidaire d'une partie 6A, 6B du corps 2 de l'étiquette, au moins l'une des parties de patte étant une partie adhésive, lesdites parties de patte étant solidarisées l'une à l'autre par collage à l'état replié des parties 6A, 6B du corps 2 de l'étiquette.

Dans ce mode de réalisation, les références numériques du mode de réalisation des figures 1 à 3 ont été reprises lorsqu'elles désignent le même élément.

La ou chaque ouverture 4 traversante est une ouverture oblongue (figures 1 à 3) ou une ouverture allongée du genre fente (figures 4 à 6) et l'axe de pliage desdites parties 6A, 6B du corps 2 s'étend sensiblement orthogonalement à l'axe longitudinal de la ou de chaque ouverture 4 traversante. Dans l'exemple des figures 4 à 6, les ouvertures 4 sont formées de deux fentes parallèles recourbées à chacune de leurs extrémités.

De même, l'axe longitudinal de la patte 3 s'étend généralement perpendiculairement à l'axe longitudinal de la ou de chaque ouverture 4 traversante du corps 2 et parallèlement à l'axe de pliage des parties 6A, 6B du corps 2.

Dans le mode de réalisation des figures 1 à 3, on obtient donc une étiquette qui, vue à plat, présente une forme générale de T avant pliage.

Dans certains cas, pour éviter par exemple un vol de lunettes ou pour les inventaires, l'une des parties 6A, 6B du corps 2 est équipée, sur sa face destinée à être repliée contre l'autre partie, d'au moins un dispositif électronique, de préférence du type RFID, tel qu'une puce RFID ou un marqueur électronique équivalent, de sorte que, à l'état replié desdites parties 6A, 6B, le dispositif électronique, en particulier la puce ou le marqueur, est logé entre lesdites parties du corps 2.

Généralement, lesdites parties 6A, 6B repliables du corps 2 sont séparées l'une de l'autre par une ligne 7 de pliage. Cette ligne de pliage est de préférence matérialisée par un rainage ou une ligne de prédécoupe du flan.

Pour réduire les risques de perte ou d'arrachage de l'étiquette, cette dernière est réalisée en un matériau de synthèse imprimable dit indéchirable manuellement. En effet, le matériau est par exemple de polypropylène, du polyéthylène ou du polyéthylène téréphtalate connu pour résister à toute déchirure due aux mauvaises manipulations ou à toute tentative de déchirure sans objet coupant.

De même, l'adhésif utilisé pour le collage de la patte est un adhésif fort. A titre d'exemple, on peut utiliser comme adhésif un adhésif acrylique en solvant.

De préférence, le corps 2 est réalisé au moins partiellement en un matériau transparent.

Généralement, le flan dans lequel l'étiquette est découpée est un film polyester apte à résister à la chaleur dégagée par les lampes des vitrines.

Les empiècements sont quant à eux réalisés à l'aide d'un film non adhésif ou d'un vernis de neutralisation chimique.

Pour faciliter son stockage, ladite étiquette 1 est, avant pose, stockée à l'état bobiné.

La pose sur des lunettes d'une étiquette de marquage conforme à l'invention s'opère comme suit. L'étiquette ayant été imprimée par une imprimante à transfert thermique et encodée par l'imprimante si elle contient une puce électronique de type RFID, est décollée de sa bande support permettant de la stocker à l'état bobiné. Ensuite, la partie 6A du corps de l'étiquette est repliée contre la partie 6B du corps de l'étiquette. L'étiquette est ensuite enfilée à travers la ou les ouvertures 4 de l'étiquette sur la branche de lunettes puis la patte est adhérée par collage au verre de lunettes. Le marquage est achevé. Lors de l'enlèvement du marquage, seul le verre comporte éventuellement des traces de colle qui doivent être éliminées uniquement dans le cas de lunettes de soleil car les lunettes de vue sont munies de verres factices.

## Revendications

1. Etiquette (1) de marquage, en particulier de lunettes (10), ladite étiquette (1) comprenant un corps (2) destiné à être porté par une branche (11) de lunettes et une patte (3) adhésive destinée à être appliquée contre un verre (12) de lunettes, corps (2) et patte (3) étant réalisés d'une seule pièce généralement par découpage d'un flan, **caractérisée en ce que** le corps (2) de l'étiquette comporte, pour son montage sur ladite branche (11) de lunette, au moins une ouverture (4) traversante à travers laquelle une branche (11) de lunettes est apte à être enfilée et **en ce qu'**au moins une partie de la patte (3) de l'étiquette est réalisée en un matériau transparent.

2. Etiquette (1) de marquage, en particulier de lunettes (10), selon la revendication 1, **caractérisée en ce que** la patte (3) est séparée du corps (2) par une zone (5) dite de liaison, ladite zone (5) de liaison étant une zone non adhésive.

3. Etiquette (1) de marquage, en particulier de lunettes (10), selon l'une des revendications 1 et 2, **caractérisée en ce que** le corps (2) de l'étiquette est formé d'au moins deux parties (6A, 6B) repliables l'une sur l'autre, au moins l'une des parties (6A, 6B) étant une partie adhésive, lesdites parties (6A, 6B) étant solidarisées l'une à l'autre par collage à l'état replié.

4. Etiquette (1) de marquage, en particulier de lunettes (10) selon la revendication 3, **caractérisée en ce que** la patte (3) est formée d'au moins deux parties positionnables l'une sur l'autre, chaque partie de patte étant solidaire d'une partie (6A, 6B) du corps (2) de l'étiquette, au moins l'une des parties de patte étant une partie adhésive, lesdites parties de patte étant solidarisées l'une à l'autre par collage à l'état replié des parties (6A, 6B) du corps (2) de l'étiquette.

5. Etiquette (1) de marquage, en particulier de lunettes (10) selon l'une des revendications 1 à 4, **caractérisée en ce que** la ou chaque ouverture (4) traversante est une ouverture oblongue ou allongée du genre fente et **en ce que** l'axe de pliage desdites parties (6A, 6B) du corps (2) s'étend sensiblement orthogonalement à l'axe longitudinal de la ou chaque ouverture (4) traversante.

6. Etiquette (1) de marquage, en particulier de lunettes (10) selon l'une des revendications 3 à 5, **caractérisée en ce que** l'une des parties (6A, 6B) du corps (2) est équipée, sur sa face destinée à être repliée contre l'autre partie, d'un dispositif électronique de préférence de type RFID, de sorte que, à l'état replié desdites parties (6A, 6B), ledit dispositif est logé entre lesdites parties du corps (2).

7. Etiquette (1) de marquage, en particulier de lunettes (10) selon l'une des revendications 3 à 6, **caractérisée en ce que** lesdites parties (6A, 6B) repliables du corps (2) sont séparées l'une de l'autre par une ligne (7) de pliage.

8. Etiquette (1) de marquage, en particulier de lunettes (10) selon l'une des revendications 1 à 7, caractérisée en qu'elle est réalisée en un matériau de synthèse imprimable dit indéchirable manuellement.

9. Etiquette (1) de marquage, en particulier de lunettes (10) selon l'une des revendications 1 à 8, **caractérisée en ce que** ledit corps (2) est réalisé au moins partiellement en un matériau transparent.

10. Etiquette (1) de marquage, en particulier de lunettes (10) selon l'une des revendications 1 à 9, **caractérisée en ce que** ladite étiquette (1) est, avant pose, stockée à l'état bobiné.
